# EUROPEAN PATENT SPECIFICATION

(11) **EP 3 132 879 B1**
(45) Date of publication and mention of the grant of the patent: **01.04.2020**
(21) Application number: 15780550.8
(22) Date of filing: 15.04.2015
(51) Int. Cl.: B23K 9/173, B21C 37/08, B23K 9/025, B23K 9/235, B23K 9/032, B23K 101/06

(54) **TACK WELDING METHOD IN PRODUCTION PROCESS FOR LARGE-DIAMETER WELDED STEEL PIPE OR TUBE**
HEFTSCHWEISSVERFAHREN IN PROZESSEN ZUR FERTIGUNG VON GESCHWEISSTEN STAHLROHREN ODER LEITUNGEN MIT GROSSEM DURCHMESSER
PROCÉDÉ DE SOUDAGE DE POINTAGE DANS UN PROCESSUS DE PRODUCTION DE TUYAUX OU TUBE EN ACIER SOUDÉ DE GRAND DIAMÈTRE

(30) Priority: 17.04.2014 JP 2014085398
(43) Date of publication of application: 22.02.2017
(73) Proprietor: JFE Steel Corporation, Tokyo 100-0011 (JP)
(72) Inventor: HAYAKAWA, Naoya, Tokyo 100-0011 (JP); TAMURA, Yukuya, Tokyo 100-0011 (JP); MORIMOTO, Yuta, Tokyo 100-0011 (JP)
(74) Representative: Grünecker Patent- und Rechtsanwälte PartG mbB
(86) International application number: PCT/JP2015/002088
(87) International publication number: WO 2015/159545

(56) References cited:
- JP-A- S57 184 599
- JP-A- 2007 283 363
- JP-A- 2007 283 363
- JP-A- 2009 241 128
- JP-A- 2013 081 985
- JP-A- 2013 240 806
- Wolfgang Scheller: "Schweißtechnische Aspekte im Großrohr- und Pipelinebau", , 22 October 2013 (2013-10-22), XP055355447, Ilmenauer schweißtechnisches Symposium 22. Oktober 2013 Retrieved from the Internet: URL:https://www.tu-ilmenau.de/fileadmin/pu blic/fertigungstechnik/Symposium/Grossrohr bau_Scheller_SZMF.pdf [retrieved on 2017-03-16]

## Description

### TECHNICAL FIELD

The present disclosure relates to a tack welding method in which tack welding is performed continuously on edges of an open pipe or tube that has been formed into a tube shape, prior to the edges being joined, in a production process for a large-diameter welded steel pipe or tube such as a UOE steel pipe or tube or a spiral steel pipe or tube (see, e.g. JP 2007 283363 A).

### BACKGROUND

A welded steel pipe or tube is normally produced by forming a steel sheet or a steel strip used as a material (hereinafter referred to as a sheet-shaped steel material) into a tube shape such as to form an open pipe or tube in which width direction ends (hereinafter referred to as edges) of the sheet-shaped steel material are in opposing positions, and subsequently joining the edges of the open pipe or tube by welding. There is widespread use of production techniques for such welded steel pipes and tubes that combine appropriate formation and welding methods in accordance with the dimensions of the welded steel pipe or tube that is to be produced.

In a production process for a large-diameter welded steel pipe or tube (for example, a UOE steel pipe or tube or a spiral steel pipe or tube), it is necessary to perform tack welding of edges of an open pipe or tube in order to maintain the shape of the open pipe or tube prior to performing welding (for example, submerged arc welding) of the edges.

A production process for a UOE steel pipe or tube, which is a typical example of a large-diameter welded steel pipe or tube, includes a step of forming a sheet-shaped steel material into an open pipe or tube using a U-press and an O-press. In this step, a clearance (referred to as a gap) arises between opposing edges of the open pipe or tube in a pipe radial direction due to the sheet-shaped steel material having a large sheet thickness. Therefore, the UOE steel pipe or tube is produced by performing tack welding while hydraulically holding the edges at which the gap has been formed in place, and subsequently performing final welding of the edges by submerged arc welding. Due to the high installation and operating costs of equipment for a U-press and an O-press, the number of sets of such equipment installed in a typical factory for steel pipe or tube production is limited. On the other hand, a large number of welding lines are typically installed because equipment related to submerged arc welding is inexpensive.

With regards to tack welding in a production process for a large-diameter welded steel pipe or tube, there is demand for high-speed welding of a similar welding speed to final welding performed by submerged arc welding. However, high-speed welding with a welding speed of greater than 2 m/minute (= 2000 mm/minute) is problematic as it makes burn through and formation of humped beads more likely to occur.

In one example, PTL I discloses a technique in which tack welding of an open pipe or tube having a sheet thickness of 20 mm is performed using a solid wire having a wire diameter of 3.2 mm, and with a welding current of 900 A and a welding speed of 5000 mm/minute. However, it is not possible to ensure sufficient throat thickness using such welding conditions if the sheet thickness of the sheet-shaped steel material that is used is further increased, which makes burn through more likely to occur in final welding performed after the tack welding.

As disclosed in PTL 2, deposition and welding speed can be increased by performing tack welding using multiple electrodes and, as a result, sufficient throat thickness can be ensured and humped beads can be prevented. However, when multiple electrodes are used, fused metal is not stable and in a situation in which fluctuations in groove position occur due to, for example, the gap at the edges of the open pipe or tube, formation of humped beads may occur more easily.

### CITATION LIST

### Patent Literature

PTL 1: JP S52-77849 A
PTL 2: JP S63-154267 A

### SUMMARY

### (Technical Problem)

The present disclosure has an objective of resolving problems associated with the conventional techniques described above by providing a tack welding method that, in tack welding of a large-diameter welded steel pipe or tube, enables an increase in welding speed while preventing humped beads, burn through, and incomplete fusion.

### (Solution to Problem)

The inventors conducted diligent research into techniques for solving the problems described above and, as a result, discovered that stable tack welding can be performed by setting appropriate tack welding conditions and by using, as a droplet transfer mode, short-circuit transfer in which droplets formed at the end of a wire come into contact (i.e., short-circuit) with a molten weld pool of the base material. The present disclosure is based on this discovery.

Specifically, primary features of the present disclosure are as follows.
1. A tack welding method for tack welding edges of an open pipe or tube prepared in a production process for a large-diameter welded steel pipe or tube, the tack welding method comprising
   performing gas metal arc welding of the edges of the open pipe or tube using a solid welding wire of 4.8 mm or greater in diameter, and with a welding current of 1000 A or greater and a distance of 25 mm or greater between a bottom portion of a groove formed at the edges of the open pipe or tube and a lower end of a contact tip to which the welding wire is attached.

In the presently disclosed tack welding method, the groove formed at the edges of the open pipe or tube (hereinafter referred to simply as edges) is preferably an X-shaped (double V-shaped) groove having a groove angle of from 40° to 100°.

With regards to the welding wire, an angle between the welding wire and a plane perpendicular to direction in which welding proceeds (hereinafter referred to as an electrode angle) is preferably a sweep-back angle of 0° or greater. It should be noted that the term "sweep-back angle" is used to refer to the angle between the welding wire and the plane perpendicular to the direction in which welding proceeds in a situation in which the welding wire is inclined such that a tip of the welding wire is positioned further than the contact tip in an opposite direction to the direction in which welding proceeds.

The tack welding is preferably performed by gas metal arc welding and particularly preferably using a shielding gas having a CO₂ content of from 50% to 100%, and is preferably performed with a welding speed of 3000 mm/minute or greater.

A large-diameter welded steel pipe or tube to which the present disclosure is applied is preferably a UOE steel pipe or tube or a spiral steel pipe or tube, and preferably has a sheet thickness of 30 mm or greater.

### (Advantageous Effect)

According to the present disclosure, welding speed can be increased and humped beads, burn through, incomplete fusion, and so forth can be prevented when performing tack welding continuously in a production process for a large-diameter welded steel pipe or tube. Therefore, the present disclosure achieves a significant effect in industry.

### BRIEF DESCRIPTION OF THE DRAWING

In the accompanying drawing:

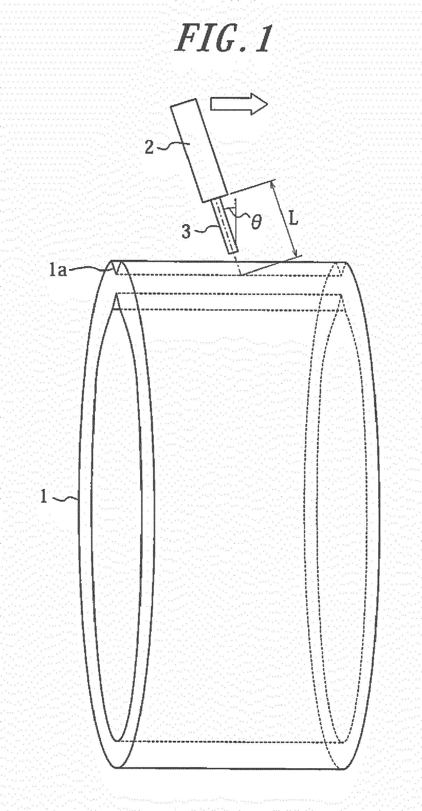

FIG. 1 illustrates the key points of contact tip positioning in tack welding.

### DETAILED DESCRIPTION

In the present disclosure, conditions are appropriately set in order that the mode of droplet transfer in tack welding is short-circuit transfer. As a result, kinetic energy of droplets remains small and the droplets are smoothly transferred to a molten weld pool without impacting on edges of an open pipe or tube. Therefore, backward molten flow of molten metal can be stabilized and humped beads, burn through, and incomplete fusion can be prevented. The following describes conditions set for tack welding.

Firstly, a solid wire that does not have internal flux is used as a welding wire. The reason for using a solid wire is that the amount of oxygen in droplets suspended from the tip of the welding wire can be limited to a low level and contraction of the droplets can be prevented. In contrast, in a situation in which a flux cored wire (hereinafter referred to as an FCW) including internal flux is used, the amount of oxygen in droplets is high, which reduces the surface tension of the droplets and increases the tendency of the droplets to detach from the wire. As a result, kinetic energy of the droplets during droplet transfer increases, transfer of the droplets occurs at high speed, fluidity of molten metal is promoted, and humped beads are more likely to form. Furthermore, welding current tends to concentrate in an outer skin of an FCW, which causes an increase in current density and thus an increase in electromagnetic force. This electromagnetic force (hereinafter referred to as electromagnetic pinching force) promotes detachment of droplets suspended from the tip of the welding wire, which results in a problem of humped bead formation due to promotion of backward molten flow of molten metal relative to the electrode.

Therefore, a solid wire is used in the present disclosure. Note that tack welding can be performed without difficulty using a single solid wire (referred to as a single electrode) by setting appropriate conditions as described below.

The solid wire has a diameter of 4.8 mm or greater. A diameter of 5.5 mm or greater is preferable. Current density is reduced as a consequence of a welding wire having a large wire diameter being used. As a result, electromagnetic pinching force can be reduced, backward molten flow of molten metal can be restricted, and smooth short-circuit transfer of droplets can be implemented. Another merit of using a large-diameter wire is that bead width in a groove increases due to a wider arc being formed, which enables deposition of molten metal up to a high position in the groove. As a result, humped beads are prevented because molten metal can be held in place between walls of the groove due to stronger interfacial tension acting to hold the molten metal between the walls of the groove. Moreover, a flat bead shape can be formed more easily because formation of a convex surface shape is restricted. This has an effect of inhibiting occurrence of welding defects in final welding performed after the tack welding. Furthermore, humped beads and burn through can be prevented by restricting backward leakage (hereinafter referred to as molten flow) of molten metal relative to the direction in which welding proceeds.

On the other hand, if the wire diameter is less than 4.8 mm, current density increases and the action of electromagnetic pinching force becomes stronger. Consequently, droplets have higher kinetic energy during transfer to the base material from the wire tip and are transferred at high-speed, leading to greater backward molten flow relative to the electrode. Moreover, incomplete fusion and formation of humped beads occur are more likely to occur due to rapid cooling of droplets as the droplets flow backward relative to the direction in which welding proceeds.

Therefore, the welding wire used in the present disclosure has a large diameter of 4.8 mm or greater. As described above, performing tack welding with a wider arc can prevent humped beads, burn through, and incomplete fusion, and contributes to stable operation in a subsequent step of joining the edges of the open pipe or tube by final welding (i.e., submerged arc welding).

However, if the wire diameter is greater than 8.0 mm, wire routing for supplying the welding wire to the contact tip becomes more difficult. Accordingly, the wire diameter is preferably 8.0 mm or less and is more preferably in a range of from 5.5 mm to 6.4 mm.

A disadvantage of performing tack welding using a welding wire having dimensions such as described above is that Joule heating does not readily occur because electrical resistance is small. Consequently, melting behavior of the welding wire does not stabilize in a situation in which only a short length of the welding wire extends from the contact tip, which results in unstable behavior of droplets suspended from the tip of the welding wire and of molten metal. It is necessary to stabilize droplets on the tip of the welding wire in order to resolve this problem.

Therefore, it is essential that tack welding is performed as illustrated in FIG. 1 with a distance L of 25 mm or greater between a bottom portion of an X-shaped groove formed at the edges 1a of an open pipe or tube 1 and a lower end of a contact tip 2. In other words, the extension (L) of a wire 3 from the contact tip 2 is made long in order to promote heating of the wire and stabilize melting of the wire by arc heat. A distance L of less than 25 mm leads to greater voltage fluctuation and non-uniform bead formation.

However, a distance L of greater than 45 mm makes it more difficult to deposit molten metal between walls of the groove formed at the edges because relative positions of the groove and the tip of the welding wire may shift. Consequently, the welding wire becomes red-hot and it becomes more difficult to maintain smooth short-circuit transfer of droplets. Accordingly, the distance between the bottom portion of the groove and the lower end of the contact tip is preferably 45 mm or less. The aforementioned distance is more preferably in a range of from 25 mm to 35 mm.

The welding current is 1000 A or greater. A welding current of 1200 A or greater is preferable. If the welding current is less than 1000 A, it is not possible to obtain a sufficient amount of deposition in high-speed welding and throat thickness is insufficient, which may result in burn through occurring.

However, if the welding current is greater than 2200 A, arc force becomes too strong, which results in excessive spatter and formation of humped beads, and makes it difficult to ensure high current for breaking the short-circuit. Accordingly, the welding current is preferably 2200A or less. A welding current in a range of from 1200 A to 2000 A is more preferable.

The groove is preferably an X-shaped groove and preferably has a groove angle in a range of from 40° to 100° in order to hold molten metal between the walls of the groove through interfacial tension of the molten metal. The groove angle is more preferably in a range of from 40° to 70°. Herein, the range stipulated above relates to the groove angle at a side of the groove at which tack welding is performed.

Short-circuit transfer is preferably performed with an arc voltage of 28 V or less, although the arc voltage does depend on the current value that is adopted. The electrode angle is preferably a sweep-back angle of 0° or greater. A sweep-back angle of 5° or greater is more preferable. As a result of the electrode angle being set in the range described above, an extremely short arc is generated in a forward direction relative to the direction in which welding proceeds and backward molten flow is restricted. As a result, humped beads and burn through can be prevented, and incomplete fusion caused by burn through can be prevented.

It should be noted that as illustrated in FIG. 1, a sweep-back angle is an angle θ that is formed between the welding wire 3 and a plane perpendicular to the direction in which welding proceeds in a situation in which the welding wire is inclined such that the tip of the welding wire 3 is positioned further than the contact tip 2 in an opposite direction to the direction in which welding proceeds.

However, if the electrode angle is a sweep-back angle of greater than 35°, occurrence of spatter may increase due to imbalance of electromagnetic force. Accordingly, the electrode angle is more preferably a sweep-back angle in a range of from 0° to 35°. A sweep-back angle in a range of from 5° to 35° is even more preferable.

Conventionally, setting the electrode angle as a sweep-back angle has been problematic in terms that humped beads are formed more easily because it is not possible to restrict molten flow in the direction in which welding proceeds. In contrast, the presently disclosed tack welding is performed with appropriate setting of related conditions such that the previously described beneficial effects of setting the electrode angle as a sweep-back angle can be effectively exploited while enabling prevention of humped beads, burn through, and incomplete fusion.

The tack welding is performed by gas metal arc welding. Although submerged arc welding is widely used for final welding of an open pipe or tube as described further above, use of gas metal arc welding for tack welding performed prior to the final welding has an effect of negating the required for a slag removal step.

A shielding gas used in the gas metal arc welding is preferably 100% CO₂ gas. In a situation in which a mixed shielding gas is used that contains CO₂ and another gas (for example, Ar), the shielding gas preferably has a CO₂ content of 50% or greater. If the CO₂ content is less than 50%, a potential gradient is reduced, droplets are reduced in size, and stability of short-circuit transfer is lost, which makes formation of humped beads more likely to occur. The CO₂ content is more preferably 75% or greater. Accordingly, CO₂ concentration in the shielding gas is preferably in a range of from 50% to 100%, and more preferably in a range of from 75% to 100%. It should be noted that the concentration of CO₂ refers to the volume ratio.

The welding speed is preferably 3000 mm/minute or greater. Tack welding with a welding speed of less than 3000 mm/minute is of limited industrial value.

However, although the welding speed is preferably as fast as possible, a fast welding speed makes formation of humped beads more likely to occur and has associated technical issues. Accordingly, the welding speed is preferably in a range of from 3000 mm/minute to 8000 mm/minute.

The sheet thickness of a large-diameter welded steel pipe or tube (i.e., sheet thickness of a sheet-shaped steel material) for which the tack welding is used is preferably 30 mm or greater. Application of the presently disclosed tack welding to a large-diameter welded steel pipe or tube having a sheet thickness in the range described above enables high-speed welding while ensuring sufficient throat thickness and preventing burn through.

As a result of tack welding of the large-diameter welded steel pipe or tube being performed under appropriate conditions as described above, a favorable bead shape can be obtained and subsequent final welding can be performed without difficulty.

The present disclosure is preferably applied to a UOE steel pipe or tube or a spiral steel pipe or tube for which final welding of an open pipe or tube is performed by submerged arc welding.

Furthermore, tack welding according to the present disclosure is preferably performed with direct current reversed polarity (electrode positive). The reason for this is that an arc can be stabilized, and occurrence of humping bead formation and spatter can be reduced.

### EXAMPLES

Open pipes or tubes were formed by equipment for UOE steel pipe or tube production using sheet-shaped steel materials (API-5L X65) of four different sheet thicknesses. Tack welding of the edges of each of the open pipes or tubes was performed by gas metal arc welding. The sheet thicknesses were as shown in Table I.

### [Table 1]

**Table 1**

| Symbol | Wire diameter (mm) | Sheet thickness (mm) | Shielding gas | Welding current (A) | Welding voltage (V) | Welding speed (mm/minute) | Electrode angle* (°) | Distance between edge groove bottom portion and contact tip lower end (mm) | Occurrence of humping | Remarks |
|---|---|---|---|---|---|---|---|---|---|---|
| 1 | 4.8 | 31.8 | 100% CO₂ | 1000 | 26 | 2000 | -5 | 27 | No | |
| 2 | 4.8 | 25.4 | 100% CO₂ | 1100 | 25 | 2500 | -5 | 27 | No | |
| 3 | 4.8 | 31.8 | 100% CO₂ | 1200 | 23 | 3000 | -5 | 27 | No | |
| 4 | 4.8 | 25.4 | 60% CO₂ | 1000 | 24 | 3000 | -10 | 25 | No | |
| | | | 40% Ar | | | | | | | |
| 5 | 4.8 | 25.4 | 75% CO₂ | 1100 | 23 | 4000 | -10 | 27 | No | |
| | | | 25% Ar | | | | | | | |
| 6 | 4.8 | 25.4 | 50% CO₂ | 1000 | 23 | 3000 | -10 | 26 | No | |
| | | | 50% Ar | | | | | | | |
| 7 | 4.8 | 12.7 | 100% CO₂ | 1400 | 25 | 6000 | -5 | 30 | No | |
| 8 | 4.8 | 12.7 | 100% CO₂ | 1300 | 22 | 7000 | -5 | 32 | No | |
| 9 | 5.5 | 31.8 | 100% CO₂ | 1200 | 24 | 2000 | 0 | 27 | No | |
| 10 | 5.5 | 25.4 | 100% CO₂ | 1250 | 24 | 2500 | -5 | 27 | No | Examples |
| 11 | 5.5 | 31.8 | 100% CO₂ | 1300 | 23 | 3000 | -5 | 27 | No | |
| 12 | 5.5 | 25.4 | 600% CO₂ | 1200 | 24 | 3000 | -10 | 25 | No | |
| | | | 40% Ar | | | | | | | |
| 13 | 5.5 | 25.4 | 75% CO₂ | 1250 | 23 | 4000 | -10 | 27 | No | |
| | | | 25% Ar | | | | | | | |
| 14 | 5.5 | 25.4 | 50% CO₂ | 1200 | 23 | 3000 | -10 | 26 | No | |
| | | | 50% Ar | | | | | | | |
| 15 | 5.5 | 12.7 | 100% CO₂ | 1400 | 24 | 6000 | -5 | 30 | No | |
| 16 | 5.5 | 12.7 | 100% CO₂ | 1300 | 23 | 7000 | -5 | 32 | No | |
| 17 | 6.4 | 12.7 | 100% CO₂ | 1500 | 23 | 4000 | -5 | 28 | No | |
| 18 | 6.4 | 38.1 | 100% CO₂ | 1300 | 22 | 3000 | -8 | 30 | No | |
| 19 | 6.4 | 12.7 | 100% CO₂ | 1450 | 23 | 4000 | -5 | 28 | No | |
| 20 | 6.4 | 38.1 | 100% CO₂ | 1400 | 23 | 3000 | -8 | 30 | No | |
| 21 | 6.4 | 38.1 | 100% CO₂ | 1600 | 24 | 3500 | -5 | 27 | No | Examples |
| 22 | 6.4 | 38.1 | 100% CO₂ | 1500 | 23 | 3000 | -5 | 29 | No | |
| 23 | 6.4 | 31.8 | 100% CO₂ | 1300 | 24 | 4000 | -5 | 30 | No | |
| 24 | 6.4 | 31.8 | 100% CO₂ | 1400 | 23 | 4000 | -5 | 26 | No | |
| 25 | 4.8 | 38.1 | 100% CO₂ | 1250 | 24 | 3000 | -5 | 27 | No | |
| 26 | 4.8 | 38.1 | 100% CO₂ | 1000 | 23 | 2500 | -5 | 29 | No | |
| 27 | 3.2 | 31.8 | 100% CO₂ | 1200 | 23 | 3000 | -5 | 20 | Yes | Comparative examples |
| 28 | 4 | 31.8 | 100% CO₂ | 1100 | 24 | 3000 | -5 | 22 | Yes | |
| 29 | 4.8 | 38.1 | 100% CO₂ | 1200 | 23 | 3000 | 0 | 23 | Yes | |
| 30 | 4.8 | 38.1 | 100% CO₂ | 1200 | 23 | 3000 | -5 | 22 | Yes | |
| 31 | 4 | 31.8 | 100% CO₂ | 1200 | 23 | 3000 | -5 | 20 | Yes | |
| 32 | 4 | 31.8 | 100% CO₂ | 1100 | 24 | 3000 | -5 | 22 | Yes | |
| 33 | 5.5 | 38.1 | 100% CO₂ | 1200 | 23 | 3000 | 5 | 23 | Yes | |
| 34 | 5.5 | 38.1 | 100% CO₂ | 1200 | 23 | 3000 | 0 | 22 | Yes | |

| | | | | | | | | | | |
|---|---|---|---|---|---|---|---|---|---|---|
| *A negative value (-) indicates a sweep-back angle | | | | | | | | | | |

The tack welding was performed using a single welding wire (i.e., a single electrode; solid wire equivalent to JIS Z3351 YS-S6) that had a wire diameter as shown in Table 1. The welding power supply was direct current reversed polarity (electrode positive) and a fixed voltage characteristic was adopted.

As shown in Table 1, a shielding gas used for the gas metal arc welding was 100% CO₂ gas or a mixed gas of CO₂ and Ar. The flow rate of the shielding gas was 50 L/minute.

The groove shape of each open pipe or tube was X-shaped. In the case of an open pipe or tube having a sheet thickness of 12.7 mm, an inner surface-side of the open pipe or tube had a groove angle of 80° and a groove depth of 4.0 mm, and an outer surface-side of the open pipe or tube had a groove angle of 100° and a groove depth of 5.0 mm. In the case of an open pipe or tube having a sheet thickness of 25.4 mm, an inner surface-side of the open pipe or tube had a groove angle of 70° and a groove depth of 8.0 mm, and an outer surface-side of the open pipe or tube had a groove angle of 60° and a groove depth of 9.0 mm. In the case of an open pipe or tube having a sheet thickness of 31.8 mm, an inner surface-side of the open pipe or tube had a groove angle of 60° and a groove depth of 9.0 mm, and an outer surface-side of the open pipe or tube had a groove angle of 60° and a groove depth of 12.0 mm. In the case of an open pipe or tube having a sheet thickness of 38.1 mm, an inner surface-side of the open pipe or tube had a groove angle of 55° and a groove depth of 12.0 mm, and an outer surface-side of the open pipe or tube had a groove angle of 50° and a groove depth of 14.0 mm.

During the tack welding, welding current, welding voltage, welding speed, electrode angle, and distance between the bottom portion of the groove and the lower end of the contact tip were as shown in Table 1.

Once the tack welding was complete, the external appearance of a bead formed by the tack welding was observed without performing final welding. A judgment of "No" (good) was made when humping did not occur and a judgment of "Yes" (defective) was made when humping did occur.

Table 1 clearly shows that good beads were obtained in examples in accordance with the present disclosure.

In contrast, bead humping occurred in comparative examples denoted by symbols 14, 15, 16, and 17, which were examples in which the distance between the bottom portion of the groove at the edges of the open pipe or tube and the lower end of the contact tip was less than 25 mm.

### REFERENCE SIGNS LIST

- 1: open pipe or tube
- la: edge
- 2: contact tip
- 3: wire

## Claims

1. A tack welding method for tack welding edges of an open pipe or tube (1) prepared in a production process for a large-diameter welded steel pipe or tube, the tack welding method comprising
performing gas metal arc welding of the edges (1a) of the open pipe or tube (1) using a solid welding wire (3), **characterized in that** the solid welding wire (3) has a diameter of 4.8 mm or greater and, in performing gas metal arc welding of the edges (1a) of the open pipe or tube (1) with a welding current of 1000 A or greater and a distance of 25 mm or greater between a bottom portion of a groove formed at the edges (1a) of the open pipe or tube (1) and a lower end of a contact tip (2) to which the welding wire (3) is attached.

2. The tack welding method of claim 1, wherein
the groove at the edges (1a) of the open pipe or tube (1) is an X-shaped groove having a groove angle of from 40° to 100°.

3. The tack welding method of claim 1 or 2, wherein
an electrode angle between the welding wire (3) and a plane perpendicular to a direction in which welding proceeds along the edges (1a) of the open pipe or tube (1) is a sweep-back angle of 0° or greater.

4. The tack welding method of any one of claims 1-3, wherein
a shielding gas having a CO₂ content of from 50% to 100% is used in the gas metal arc welding.

5. The tack welding method of any one of claims 1 -4, wherein
the large-diameter steel pipe or tube (1) has a sheet thickness of 30 mm or greater and the gas metal arc welding has a welding speed of 3000 mm/minute or greater.

6. The tack welding method of any one of claims 1-5, wherein
the large-diameter steel pipe or tube (1) is a UOE steel pipe or tube or a spiral steel pipe or tube.

## Patentansprüche

1. Heftschweiß-Verfahren zum Heftschweißen von Rändern eines/einer offenen Rohrs oder Röhre (1), das/die in einem Herstellungsverfahren für ein/e geschweißtes/geschweißte Stahlrohr oder -röhre mit großem Durchmesser gefertigt wird, wobei das Heftschweiß-Verfahren umfasst:
Durchführen von Metall-Schutzgasschweißen der Ränder (1a) des/der offenen Rohrs oder Röhre (1) unter Verwendung eines massiven Schweißdrahtes (3), **dadurch gekennzeichnet, dass** der massive Schweißdraht (3) einen Durchmesser von 4,8 mm oder mehr hat und Durchführen von Metall-Schutzgasschweißen der Ränder (1a) des/der offenen Rohrs oder Röhre mit einem Schweißstrom von 1000 A oder darüber und einem Abstand von 25 mm oder mehr zwischen einem Bodenabschnitt einer an den Rändern (1a) des/der offenen Rohrs oder Röhre (1) ausgebildeten Nut und einem unteren Ende einer Kontaktspitze (2), an der der Schweißdraht (3) angebracht ist.

2. Heftschweiß-Verfahren nach Anspruch 1, wobei
die Nut an den Rändern (1a) des/der offenen Rohrs oder Röhre (1) eine X-förmige Nut mit einem Öffnungswinkel von 40° bis 100° ist.

3. Heftschweiß-Verfahren nach Anspruch 1 oder 2, wobei
ein Elektrodenwinkel zwischen dem Schweißdraht (3) und einer Ebene senkrecht zu einer Richtung, in der das Schweißen entlang der Ränder (1a) des/der offenen Rohres oder Röhre (1) verläuft, ein Pfeilungswinkel (sweep-back angle) von 0° oder größer ist.

4. Heftschweiß-Verfahren nach einem der Ansprüche 1 - 3, wobei
ein Schutzgas mit einem CO₂-Gehalt von 50% bis 100% bei dem Metall-Schutzgasschweißen verwendet wird.

5. Heftschweiß-Verfahren nach einem der Ansprüche 1 - 4, wobei
das/die Stahlrohr oder -röhre (1) mit großem Durchmesser eine Blechdicke von 30 mm oder mehr hat und das Metall-Schutzgasschweißen eine Schweißgeschwindigkeit von 3000 mm/min oder mehr hat.

6. Heftschweiß-Verfahren nach einem der Ansprüche 1 - 5, wobei
das/die Stahlrohr oder -röhre mit großem Durchmesser (1) ein/e UOE-Stahlrohr oder -röhre oder ein/e Spiral-Stahlrohr oder -röhre ist.

## Revendications

1. Procédé de soudage par pointage pour un soudage par pointage de bords d'un tuyau ou tube ouvert (1) préparé dans un processus de production d'un tuyau ou tube en acier soudé de grand diamètre, le procédé de soudage par pointage comprenant les étapes consistant à
effectuer un soudage à l'arc sous protection gazeuse des bords (1a) du tuyau ou tube ouvert (1) en utilisant un fil de soudage plein (3), **caractérisé en ce que** le fil de soudage plein (3) a un diamètre de 4,8 mm ou plus et, **en ce que** le soudage à l'arc sous protection gazeuse des bords (1a) du tuyau ou tube ouvert (1) est effectué avec un courant de soudage de 1000 A ou plus et une distance de 25 mm ou plus entre une partie de fond d'une rainure formée au niveau des bords (1a) du tuyau ou tube ouvert (1) et une extrémité inférieure d'une pointe de contact (2) à laquelle le fil de soudage (3) est attaché.

2. Procédé de soudage par pointage selon la revendication 1, dans lequel
la rainure au niveau des bords (1a) du tuyau ou tube ouvert (1) est une rainure en forme de X ayant un angle de rainure allant de 40 ° à 100 °.

3. Procédé de soudage par pointage selon la revendication 1 ou 2, dans lequel
un angle d'électrode entre le fil de soudage (3) et un plan perpendiculaire à une direction dans laquelle le soudage se déroule le long des bords (1a) du tuyau ou tube ouvert (1) est un angle de balayage arrière de 0 ° ou plus.

4. Procédé de soudage par pointage selon l'une quelconque des revendications 1 à 3, dans lequel
un gaz de protection ayant une teneur en CO₂ de 50 % à 100 % est utilisé lors du soudage sous protection gazeuse.

5. Procédé de soudage par pointage selon l'une quelconque des revendications 1 à 4, dans lequel
le tuyau ou tube en acier de grand diamètre (1) a une épaisseur de tôle de 30 mm ou plus et le soudage à l'arc sous protection gazeuse a une vitesse de soudage de 3 000 mm/minute ou plus.

6. Procédé de soudage par pointage selon l'une quelconque des revendications 1 à 5, dans lequel
le tuyau ou tube en acier de grand diamètre (1) est un tuyau ou tube en acier UOE ou un tuyau ou tube en acier en spirale.
